(19)

Europäisches Patentamt

European Patent Office

Office européen des brevets

(11) **EP 4 040 589 A1**

(12) **EUROPEAN PATENT APPLICATION**
published in accordance with Art. 153(4) EPC

(43) Date of publication:
**10.08.2022 Bulletin 2022/32**

(21) Application number: **20885010.7**

(22) Date of filing: **06.11.2020**

(51) International Patent Classification (IPC):
**H01M 50/409** (2021.01)    **H01M 50/40** (2021.01)
**H01M 10/052** (2010.01)

(52) Cooperative Patent Classification (CPC):
**H01M 10/052; H01M 50/40; H01M 50/409;**
Y02E 60/10

(86) International application number:
**PCT/KR2020/015558**

(87) International publication number:
**WO 2021/091330 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.11.2019 KR 20190142909**

(71) Applicant: **LG Energy Solution, Ltd.**
**Seoul 07335 (KR)**

(72) Inventors:
• **HAN, Sung-Jae**
  **Daejeon 34122 (KR)**

• **MUN, Sung Cik**
  **Daejeon 34122 (KR)**
• **LEE, Joo-Sung**
  **Daejeon 34122 (KR)**
• **KIM, Bong-Tae**
  **Daejeon 34122 (KR)**
• **BAE, Won-Sik**
  **Daejeon 34122 (KR)**
• **AN, Hyo-Sun**
  **Daejeon 34122 (KR)**

(74) Representative: **Hoffmann Eitle**
**Patent- und Rechtsanwälte PartmbB**
**Arabellastraße 30**
**81925 München (DE)**

(54) **CROSS-LINKED SEPARATOR FOR LITHIUM SECONDARY BATTERY, COMPRISING CROSS-LINKED POLYOLEFIN, AND MANUFACTURING METHOD THEREFOR**

(57)    Disclosed are a crosslinked separator for a lithium secondary battery which comprises a crosslinked polyolefin porous substrate including a plurality of fibrils and pores formed by the fibrils entangled with one another, wherein polyolefin chains forming the fibrils are crosslinked directly with one another; and shows a change in tensile strength of 20% or less in the machine direction, as compared to a non-crosslinked separator including a polyolefin porous substrate before crosslinking, and a method for manufacturing the same. The crosslinked separator for a lithium secondary battery has excellent thermal safety, while not adversely affecting the other physical properties.

FIG. 1

EP 4 040 589 A1

**Description**

TECHNICAL FIELD

The present disclosure relates to a crosslinked separator for a lithium secondary battery comprising crosslinked polyolefin and a method for manufacturing the same.

The present application claims priority to Korean Patent Application No. 10-2019-0142909 filed on November 8, 2019 in the Republic of Korea, the disclosures of which are incorporated herein by reference.

BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles. In this context, electrochemical devices have been most spotlighted. Among such electrochemical devices, development of rechargeable secondary batteries has been focused.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte.

Such a lithium secondary battery includes a positive electrode, a negative electrode, an electrolyte and a separator. Particularly, it is required for the separator to have insulation property for separating and electrically insulating the positive electrode and the negative electrode from each other and high ion conductivity for increasing lithium ion permeability based on high porosity.

In general, the separator may be obtained by mixing polyolefin with a diluting agent, carrying out extrusion and elongating to form a film, and extracting the diluting agent by using a solvent, or the like, to form pores.

Meanwhile, there is a need for remarkable improvement of the safety and cost of lithium secondary batteries in order to apply the lithium secondary batteries to electric vehicles (EV).

In the case of a typical polyolefin separator, a polyethylene (PE) separator, it has a low melting point (Tm) and may cause ignition and explosion, when a battery is used abnormally and the battery temperature is increased to the melting point of polyethylene or higher to generate a meltdown phenomenon. As a method for reinforcing the safety of a separator, there has been an attempt to use a PE/PP/PE trilayer separator by blending polypropylene (PP) having a relatively higher melting point as compared to polyethylene, instead of a polyethylene monolayer separator. Such a PE/PP/PE trilayer separator is advantageous in that it shows an increased meltdown temperature as compared to the polyethylene monolayer separator, but shows a limitation in that it requires a more complicated manufacturing process as compared to the wet monolayer polyethylene separator. In addition, as another method for reinforcing the safety of a separator, there has been an attempt to use a crosslinking agent to form a crosslinked coating layer on polyethylene. However, the method shows low processing efficiency due to the production of byproducts and causes formation of foreign materials on a separator.

DISCLOSURE

Technical Problem

The present disclosure is designed to solve the problems of the related art, and therefore the present disclosure is directed to providing a crosslinked separator for a lithium secondary battery comprising crosslinked polyolefin and having improved high-temperature safety.

The present disclosure is also directed to providing a simplified method for manufacturing the crosslinked separator for a lithium secondary battery comprising crosslinked polyolefin.

Technical Solution

In one aspect of the present disclosure, according to the first embodiment, there is provided a crosslinked separator for a lithium secondary battery, which comprises a crosslinked polyolefin porous substrate including a plurality of fibrils and pores formed by the fibrils entangled with one another, wherein polyolefin chains forming the fibrils are crosslinked directly with one another; and shows a change in tensile strength of 20% or less in the machine direction, as compared to a non-crosslinked separator including a polyolefin porous substrate before crosslinking.

According to the second embodiment, there is provided the crosslinked separator for a lithium secondary battery as defined in the first embodiment, which may show a change in tensile strength of 0-20% in the machine direction, as compared to the non-crosslinked separator.

According to the third embodiment, there is provided the crosslinked separator for a lithium secondary battery as defined in the first or the second embodiment, which may show a change in puncture strength of 10% or less, as compared to the non-crosslinked separator.

According to the fourth embodiment, there is provided the crosslinked separator for a lithium secondary battery as defined in any one of the first to the third embodiments, which further may comprise a porous coating layer formed on at least one surface of the crosslinked polyolefin porous substrate,

wherein the non-crosslinked separator further may comprise a porous coating layer formed on at least one surface of the polyolefin porous substrate before crosslinking, and
the porous coating layer may comprise a binder polymer and inorganic particles, and may have interstitial volumes formed by the inorganic particles that are substantially in contact with one another, wherein the interstitial volumes mean spaces defined by the inorganic particles that are substantially in contact with one another in a closely packed or densely packed structure of the inorganic particles, and the interstitial volumes among the inorganic particles become vacant spaces forming pores of the porous coating layer.

According to the fifth embodiment, there is provided the crosslinked separator for a lithium secondary battery as defined in any one of the first to the fourth embodiments, which may show a change in air permeability of 10% or less, as compared to the non-crosslinked separator.

According to the sixth embodiment, there is provided the crosslinked separator for a lithium secondary battery as defined in any one of the first to the fifth embodiments, which may show a change in weight per unit area of 5% or less, as compared to the non-crosslinked separator.

According to the seventh embodiment, there is provided the crosslinked separator for a lithium secondary battery as defined in any one of the first to the sixth embodiments, which may show a change in electrical resistance of 15% or less, as compared to the non-crosslinked separator.

According to the eighth embodiment, there is provided the crosslinked separator for a lithium secondary battery as defined in any one of the first to the seventh embodiments, wherein the crosslinked polyolefin porous substrate may have a crosslinking degree of 10-80%.

In another aspect of the present disclosure, according to the ninth embodiment, there is provided a method for manufacturing the crosslinked separator for a lithium secondary battery as defined in the first embodiment, the method comprising the steps of:

applying a Type 2 photoinitiator composition comprising a Type 2 photoinitiator and a solvent for the Type 2 photoinitiator to a polyolefin porous substrate; and
irradiating UV rays to the polyolefin porous substrate coated with the Type 2 photoinitiator composition,
wherein the content of the Type 2 photoinitiator is 0.05-0.3 parts by weight based on 100 parts by weight of the solvent for the Type 2 photoinitiator.

According to the tenth embodiment, there is provided the method for manufacturing the crosslinked separator for a lithium secondary battery as defined in the ninth embodiment, wherein the Type 2 photoinitiator composition may be a composition for forming a porous coating layer further comprising inorganic particles and a binder polymer.

According to the eleventh embodiment, there is provided the method for manufacturing the crosslinked separator for a lithium secondary battery as defined in the ninth or the tenth embodiment, wherein the Type 2 photoinitiator may comprise thioxanthone (TX), a thioxanthone derivative, benzophenone (BPO), a benzophenone derivative, or a mixture of two or more of them.

According to the twelfth embodiment, there is provided the method for manufacturing the crosslinked separator for a lithium secondary battery as defined in the eleventh embodiment, wherein the Type 2 photoinitiator may comprise 2-isopropylthioxanthone (ITX), thioxanthone (TX), or a mixture thereof.

According to the thirteenth embodiment, there is provided the method for manufacturing the crosslinked separator for a lithium secondary battery as defined in any one of the ninth to the twelfth embodiments, wherein the UV rays may be irradiated with an irradiation light dose of 10-1000 mJ/cm$^2$.

In still another aspect of the present disclosure, according to the fourteenth embodiment, there is provided a lithium secondary battery comprising a positive electrode, a negative electrode and a separator interposed between the positive electrode and the negative electrode, wherein the separator is the crosslinked separator for a lithium secondary battery as defined in any one of the first to the eighth embodiments.

Advantageous Effects

The crosslinked separator for a lithium secondary battery according to the present disclosure has excellent heat resistance, while not adversely affecting the other physical properties of a polyolefin porous substrate, by forming crosslinking through the direct crosslinking of the polyolefin chains forming the fibrils of the polyolefin porous substrate.

Particularly, the crosslinked separator for a lithium secondary battery according to the present disclosure comprises crosslinked polyolefin porous substrate including a plurality of polyolefin fibrils; and pores formed by the polyolefin fibrils entangled with one another, wherein the polyolefin chains forming the fibrils are directly crosslinked with one another. Therefore, the finally manufactured crosslinked separator can provide improved decrease in mechanical strength, even when it dose not include a separate surface coating layer for improving heat resistance, and can ensure heat resistance.

In addition, the method for manufacturing a crosslinked separator for a lithium secondary battery according to the present disclosure uses a significantly small amount of a Type 2 photoinitiator to carry out the crosslinking of the polyolefin chains, while not adversely affecting the other physical properties of the polyolefin porous substrate.

In the method for manufacturing a crosslinked separator for a lithium secondary battery according to the present disclosure, the polyolefin chains can be crosslinked with a significantly lower UV light dose as compared to the light dose used for the conventional UV crosslinking. Therefore, the crosslinked separator for a lithium secondary battery comprising a crosslinked polyolefin porous substrate shows high applicability to a process for mass production.

## DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

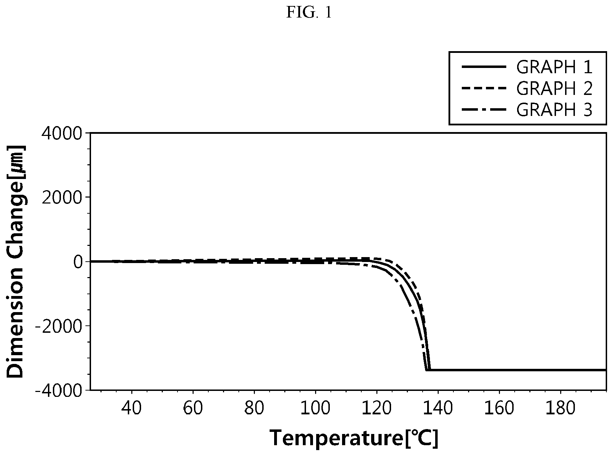

FIG. 1 is a graph illustrating the heat shrinkage of the crosslinked separator manufactured in Example 5, heat shrinkage of a substrate obtained after removing the porous coating layer from the crosslinked separator, and the heat shrinkage of the substrate after washing with acetone.

## BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In one aspect of the present disclosure, there is provided a crosslinked separator for a lithium secondary battery, which comprises a crosslinked polyolefin porous substrate including a plurality of fibrils and pores formed by the fibrils entangled with one another, wherein polyolefin chains forming the fibrils are crosslinked directly with one another; and shows a change in tensile strength of 20% or less in the machine direction, as compared to a non-crosslinked separator including a polyolefin porous substrate before crosslinking.

Herein, 'fibril' refers to one formed through the longitudinal elongation and orientation of the polymer chains forming a polyolefin porous substrate during the manufacture of the porous substrate so that the binding force between the adjacent molecular chains may be increased and the chains may be assembled in the longitudinal direction. As a result, the crosslinked polyolefin porous substrate according to the present disclosure has a layered structure including a plurality of fibrils aligned in parallel with the substrate surface.

Herein, the expression 'crosslinked directly (direct crosslinking)' refers to a state of direct crosslinking between the polyolefin chains forming the fibrils substantially including polyolefin (preferably, fibrils consisting of polyolefin alone), after the fibrils are provided with reactivity by the addition of a Type 2 photoinitiator. Therefore, crosslinking occurring between a crosslinking agent introduced additionally does not correspond to 'direct crosslinking'. In addition, the crosslinking occurring between a crosslinking agent introduced additionally and the polyolefin chains does not correspond to 'direct crosslinking' as defined by the present disclosure, even when the fibrils substantially include polyolefin or consist of polyolefin alone.

The term 'direct crosslinking' refers to crosslinking accomplished by a Type 2 photoinitiator.

It is generally known that photoinitiators are classified into Type 1 photoinitiators and Type 2 photoinitiators.

The Type 1 photoinitiator undergoes unimolecular bond cleavage after absorbing light, and then is converted into reactive species. The Type 1 photoinitiator does not require any other chemical species for its function. It is known that when carrying out crosslinking of polyolefin (e.g. polyethylene) chains by using the Type 1 photoinitiator and a curing agent, the initiator or curing agent is bound to radicals generated from the polyethylene chains, resulting in crosslinking.

On the contrary, it is known that the Type 2 photoinitiator undergoes bimolecular reaction, and reacts with another molecule (e.g. co-initiator or synergist) after absorbing light to form a reactive compound.

However, even though the Type 2 photoinitiator is used according to the present disclosure, it forms radicals and is converted into a reactive compound, while hydrogen atoms are removed by hydrogen abstraction merely by light absorption with no aid of another co-initiator or synergist, and allows conversion of polyolefin itself into reactive polyolefin. Therefore, according to an embodiment of the present disclosure, it is possible to provide a crosslinked polyolefin porous substrate which includes polyolefin chains of fibrils formed of polyolefin compounds crosslinked directly.

According to an embodiment of the present disclosure, the crosslinking degree of polyolefin in the crosslinked polyolefin porous substrate may be 10-80%, or 30-55%. Herein, the crosslinking degree is calculated by dipping the crosslinked polyolefin porous substrate in a xylene solution at 135°C, carrying out boiling for 12 hours, weighing the weight of residue, and calculating the percentage of the weight of the residue based on the initial weight, according to ASTM D2765. When the crosslinked polyolefin porous substrate according to the present disclosure has the above-defined range of crosslinking degree, it is possible to provide a crosslinked separator with a desired level of meltdown temperature, improved heat shrinkage and an increased modulus.

According to an embodiment of the present disclosure, the crosslinked polyolefin porous substrate may be formed from a polyolefin porous film, polyolefin porous nonwoven web or a combination thereof.

According to an embodiment of the present disclosure, the polyolefin may be polyethylene; polypropylene; polybutylene; polypentene; polyhexene; polyoctene; a copolymer of at least two of ethylene, propylene, butene, pentene, 4-methylpentene, hexene, and octene; or a mixture thereof.

Particularly, the polyethylene includes low-density polyethylene (LDPE), linear low-density polyethylene (LLDPE), high-density polyethylene (HDPE), or the like. Among those, high-density polyethylene having a high crystallization degree and a high resin melting point is most preferred.

According to an embodiment of the present disclosure, the polyolefin may have a weight average molecular weight of 200,000-1,500,000, 220,000-1,000,000, or 250,000-800,000. According to the present disclosure, it is possible to obtain a separator having excellent strength and heat resistance finally, while ensuring separator film uniformity and film-forming processability, by using a high-molecular weight polyolefin having a weight average molecular weight within the above-defined range as a starting material for manufacturing a crosslinked separator for a lithium secondary battery.

The crosslinked separator for a lithium secondary battery according to the present disclosure has excellent mechanical strength even after crosslinking. According to the present disclosure, the crosslinked separator shows a change in tensile strength of 20% or less in the machine direction, as compared to a non-crosslinked separator including a polyolefin porous substrate before crosslinking.

Herein, the change in tensile strength of the crosslinked separator in the machine direction as compared to the non-crosslinked separator may be calculated according to the following formula.

$$\text{Change (\%) in tensile strength in machine direction} = [(\text{Tensile strength in machine direction of non-crosslinked separator including polyolefin porous substrate before crosslinking}) - (\text{Tensile strength in machine direction of crosslinked separator including polyolefin porous substrate after crosslinking})] / (\text{Tensile strength in machine direction of non-crosslinked separator including polyolefin porous substrate before crosslinking}) \times 100$$

According to an embodiment of the present disclosure, tensile strength in the machine direction may be determined according to ASTM D882. Particularly, tensile strength in the machine direction may be obtained by measuring the strength at a time point where a specimen having a size of 100 mm x 15 mm is broken, when the sample is drawn in the machine direction at a rate of 50 mm/min by using a universal testing system (UTM) (available from Instron, model No.: 3345).

According to an embodiment of the present disclosure, the crosslinked separator may show a change in tensile strength in the machine direction of 0-20%, 0-10%, 0-9%, 0-8%, or 0-7.53%, as compared to the non-crosslinked separator.

According to an embodiment of the present disclosure, the crosslinked separator may show a change in puncture strength of 10% or less, 0.5-10%, 1-9%, or 1.18-8.71%, as compared to the non-crosslinked separator.

Herein, the change in puncture strength of the crosslinked separator as compared to the non-crosslinked separator may be calculated according to the following formula.

$$
\begin{aligned}
\text{Change (\%) in puncture strength} = [&(\text{Puncture strength of non-crosslinked} \\
&\text{separator including polyolefin porous substrate before crosslinking}) \\
&- (\text{Puncture strength of crosslinked separator including polyolefin porous substrate after crosslinking})] \\
&/ (\text{Puncture strength of non-crosslinked separator including polyolefin porous substrate before crosslinking}) \times 100
\end{aligned}
$$

According to an embodiment of the present disclosure, the puncture strength may be determined according to ASTM D2582. Particularly, after setting a round tip with a diameter of 1 mm to operate at a rate of 120 mm/min, the puncture strength may be determined according to ASTM D2582.

According to the present disclosure, the polyolefin chains of the fibrils included in the polyolefin porous substrate form direct crosslinking. As a result, the polyolefin porous substrate can retain its pore structure after crosslinking as it is before crosslinking, and the air permeability and weight per unit area of the crosslinked separator are not significantly increased as compared to the separator before crosslinking and show a small change.

According to an embodiment of the present disclosure, the crosslinked separator may show a change in air permeability of 10% or less, 0-10%, 0-5%, or 0-3%, and a change in weight per unit area of 5% or less, or 0-5%, as compared to the non-crosslinked separator.

According to an embodiment of the present disclosure, when the crosslinked separator shows a change in air permeability and a change in weight per unit area within the above-defined ranges before crosslinking and after crosslinking, it is possible to improve the physical properties, such as thermal safety, while not causing a change in the performance of the separator.

Herein, the change in air permeability and the change in weight per unit area of the crosslinked separator before crosslinking and after crosslinking may be calculated according to the following formula.

$$
\begin{aligned}
\text{Change (\%) in air permeability} = [&(\text{Air permeability of crosslinked separator} \\
&\text{including polyolefin porous substrate after crosslinking}) \\
&- (\text{Air permeability of non-crosslinked separator including polyolefin porous substrate before crosslinking})] \\
&/ (\text{Air permeability of non-crosslinked separator including polyolefin porous substrate before crosslinking}) \times 100
\end{aligned}
$$

$$
\begin{aligned}
\text{Change (\%) in weight per unit area} = [&(\text{Weight per unit area of crosslinked} \\
&\text{separator including polyolefin porous substrate after crosslinking}) \\
&- (\text{Weight per unit area of non-crosslinked separator including polyolefin porous substrate before crosslinking})] \\
&/ (\text{Weight per unit area of non-crosslinked separator including polyolefin porous substrate before crosslinking}) \times 100
\end{aligned}
$$

The air permeability (Gurley) may be determined according to ASTM D726-94. Herein, Gurley refers to resistance against air flow and is determined by a Gurley densometer. The air permeability value described herein is expressed by the time (seconds), i.e. air permeation time, required for 100 cc of air to pass through a section of sample substrate having an area of 1 in$^2$ under a pressure of 12.2 in H$_2$O.

The weight per unit area (g/m$^2$) refers to the weight of a sample having a width of 1 m and a length of 1 m.

According to an embodiment of the present disclosure, the crosslinked separator may show a change in electrical resistance ($\Omega$) of 15% or less, 2-10%, or 2-5%, as compared to the non-crosslinked separator. When the crosslinked separator shows a change in electrical resistance within the above-defined range, it may show a low resistance to prevent degradation of the performance of a battery. The electrical resistance may be determined by allowing a coin cell manufactured by using a separator sample to stand at room temperature for 1 day and measuring the resistance of the separator through impedance analysis.

Herein, the change in electrical resistance of the crosslinked separator before crosslinking and after crosslinking may be calculated according to the following formula.

$$\text{Change (\%) in electrical resistance} = [(\text{Electrical resistance of crosslinked separator including polyolefin porous substrate after crosslinking}) - (\text{Electrical resistance of non-crosslinked separator including polyolefin porous substrate before crosslinking})] / (\text{Electrical resistance of non-crosslinked separator including polyolefin porous substrate before crosslinking}) \times 100$$

According to an embodiment of the present disclosure, the crosslinked separator further may comprise a porous coating layer formed on at least one surface of the crosslinked polyolefin porous substrate,

wherein the non-crosslinked separator further may comprise a porous coating layer formed on at least one surface of the polyolefin porous substrate before crosslinking, and
the porous coating layer may comprise a binder polymer and inorganic particles, and have interstitial volumes formed by the inorganic particles that are substantially in contact with one another, wherein the interstitial volumes mean spaces defined by the inorganic particles that are substantially in contact with one another in a closely packed or densely packed structure of the inorganic particles, and the interstitial volumes among the inorganic particles become vacant spaces forming pores of the porous coating layer.

The porous coating layer may have a micropore structure by the interstitial volumes among the inorganic particles and the interstitial volumes may function as a kind of spacer with which the porous coating layer can retain its physical shape. In addition, the inorganic particles are generally characterized in that they undergo no change in physical properties even at a high temperature of 200° C or higher. Therefore, the porous coating layer provides the crosslinked separator for a lithium secondary battery with excellent heat resistance, such as improved heat shrinkage.

According to an embodiment of the present disclosure, the porous coating layer may have a thickness of 1-50 $\mu$m, 2-30 $\mu$m, or 2-20 $\mu$m.

According to an embodiment of the present disclosure, the weight ratio of the inorganic particles to the binder polymer in the porous coating layer may be determined considering the thickness, pore size and porosity of a finally manufactured porous coating layer, and may be 50:50-99.9:0.1, or 60:40-99.5:0.5. When the weight ratio of the inorganic particles to the binder polymer satisfies the above-defined range, it is possible to prevent the problem of a decrease in pore size and porosity of the resultant coating layer, caused by an excessive increase in content of the binder polymer and a decrease in vacant spaces formed among the inorganic particles. It is also possible to solve the problem of degradation of mechanical properties of the resultant coating layer, caused by an excessive decrease in content of the binder polymer and degradation of adhesion among the inorganic particles.

According to an embodiment of the present disclosure, there is no particular limitation in the size of the inorganic particles of the porous coating layer. However, the inorganic particles preferably may have a size of 0.001-10 $\mu$m, 0.01-10 $\mu$m, or 0.05-5 $\mu$m or 0.1-2 $\mu$m in order to form a coating layer with a uniform thickness and to provide suitable porosity. When the size of the inorganic particles satisfies the above-defined range, the inorganic particles maintain dispersibility to facilitate controlling the physical properties of the separator and to avoid an increase in thickness of the porous coating layer, thereby providing improved mechanical properties. In addition, it is possible to reduce a risk of internal short-circuit caused by an excessively large pore size during the charge/discharge of a battery.

There is no particular limitation in the inorganic particles, as long as they are electrochemically stable. In other words, there is no particular limitation in the inorganic particles, as long as they cause no oxidation and/or reduction in the range (e.g. 0-5 V based on $Li/Li^+$) of operating voltage of an applicable electrochemical device. Particularly, when using inorganic particles having ion transportability, it is possible to improve the ion conductivity in an electrochemical device to assist improvement of the performance of the electrochemical device. In addition, when using inorganic particles having a high dielectric constant, it is possible to improve the ion conductivity of an electrolyte by increasing the dissociation degree of an electrolyte salt, such as a lithium salt, in a liquid electrolyte.

For the above-mentioned reasons, the inorganic particles may include inorganic particles having a dielectric constant of 5 or more, or 10 or more, inorganic particles having lithium ion transportability or a mixture thereof. Non-limiting examples of the inorganic particles having a dielectric constant of 5 or more may include any one selected from the group consisting of $BaTiO_3$, $Pb(Zr,Ti)O_3$ (PZT), $Pb_{1-x}La_xZr_{1-y}Ti_yO_3$ (PLZT, wherein $0 < x < 1$, $0 < y < 1$), $Pb(Mg_{1/3}Nb_{2/3})O_3-PbTiO_3$ (PMN-PT), hafnia ($HfO_2$), $SrTiO_3$, $SnO_2$, $CeO_2$, $MgO$, $NiO$, $CaO$, $ZnO$, $ZrO_2$, $Y_2O_3$, $Al_2O_3$, $\gamma$-AlOOH, $SiC$, $TiO_2$, or a mixture of two or more of them. In addition, when using the high-dielectric constant inorganic particles in combination with the inorganic particles having ion transportability, it is possible to obtain a synergic effect.

Non-limiting examples of the inorganic particles having lithium ion transportability include lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $(LiAlTiP)_xO_y$-based glass ($1<x<4$, $0<y<13$), such as $14Li_2O-9Al_2O_3-38TiO_2-39P_2O_5$, lithium lanthanum titanate ($Li_xLa_yTiO_3$, $0 <x < 2$, $0 < y < 3$), lithium germanium thiophosphate ($Li_xGe_yP_zS_w$, $0 < x < 4$, $0 < y < 1$, $0 < z < 1$, $0 < w < 5$), such as $Li_{3.25}Ge_{0.25}P_{0.75}S_4$, lithium nitride ($Li_xN_y$, $0 < x < 4$, $0 < y < 2$), such as $Li_3N$, $SiS_2$-based glass ($Li_xSi_yS_z$, $0 < x < 3$, $0 < y < 2$, $0 < z < 4$), such as $Li_3PO_4-Li_2S-SiS_2$, and $P_2S_5$-based glass ($Li_xP_yS_z$, $0 < x < 3$, $0 < y < 3$, $0 < z < 7$), such as $LiILi_2S-P_2S_5$, or a mixture thereof.

The binder polymer included in the porous coating layer may include polyvinylidene fluoride, polyvinylidene fluoride-co-hexafluoropropylene, polyvinylidene fluoride-co-chlorotrifluoroethylene, polyvinylidene fluoride-co-trifluoroethylene, polymethyl methacrylate, polyacrylonitrile, polyvinyl pyrrolidone, polyvinyl acetate, polyethylene-co-vinyl acetate, polyethylene oxide, cellulose acetate, cellulose acetate butyrate, cellulose acetate propionate, cyanoethylpullulan, cyanoethylpolyvinylalchol, cyanoethyl cellulose, cyanoethyl sucrose, pullulan, carboxymethyl cellulose, acrylonitrile-styrene-butadiene copolymer, polyimide, or a mixture of two or more of them.

According to an embodiment of the present disclosure, the porous coating layer may further include a dispersing agent or a dispersive binder polymer. The dispersing agent functions to improve the dispersibility of the inorganic particles. In addition to the function of improving the dispersibility, the dispersing agent has a function as an adhesive binder polymer, and thus may be referred to as a dispersive binder polymer. Non-limiting examples of the dispersing agent include polymeric compounds, such as acrylic copolymers, cyanoethyl polyvinyl alcohol, phenolic compounds including baicalin, luteolin, taxifolin, myricetin, quercetin, rutin, catechin, epigallocatechin gallate, butein, piceatannol and tannic acid, pyrogallic acid, amylose, amylopectin, xanthan gum and fatty acid compounds, or a mixture of two or more of them.

The acrylic copolymers may be copolymers containing a functional group selected from OH, COOH, CN, amine and amide groups, or two or more functional groups of them.

Particular examples of such acrylic copolymers may include, but are not limited to: ethyl acrylate-acrylic acid-N,N-dimethylacrylamide copolymer, ethyl acrylate-acrylic acid-2-(dimethylamino)ethyl acrylate copolymer, ethyl acrylate-acrylic acid-N,N-diethylacrylamide copolymer, ethyl acrylate-acrylic acid-2-(diethylamino)ethyl acrylate copolymer, or two or more of them.

The pore size and porosity of the porous coating layer mainly depend on the size of the inorganic particles. For example, when using inorganic particles having a particle diameter of 1 $\mu$m or less, the resultant pores also have a size of 1 $\mu$m or less. Such a porous structure is filled with an electrolyte injected subsequently and the electrolyte functions to transport ions. Therefore, the pore size and porosity are important factors which affect control of the ion conductivity of the porous inorganic coating layer.

The porous coating layer according to an embodiment of the present disclosure may have a pore size of 0.001-10 $\mu$m or 0.001-1 $\mu$m. In addition, the porous coating layer may have a porosity of 5-95%, 10-95%, 20-90%, or 30-80%. The pore size may be determined by capillary flow porosimetry. The porosity corresponds to the value obtained by subtraction of the volume of the coating layer derived from the weight and density of each of the ingredients of the coating layer from the volume of the porous inorganic coating layer calculated from the thickness, width and length thereof.

When the porous coating layer has a pore size and/or porosity within the above-defined range, the crosslinked separator according to an embodiment of the present disclosure may be prevented from a short-circuit occurring in an abnormal state and may be provided with suitable resistance characteristics and air permeability at the same time.

In another aspect of the present disclosure, there is provided a method for manufacturing a crosslinked separator for a lithium secondary battery, comprising the steps of:

applying a Type 2 photoinitiator composition comprising a Type 2 photoinitiator and a solvent for the Type 2 photoinitiator to a polyolefin porous substrate (step S1); and

irradiating UV rays to the polyolefin porous substrate coated with the Type 2 photoinitiator composition (step S2), wherein the content of the Type 2 photoinitiator is 0.05-0.3 parts by weight based on 100 parts by weight of the solvent for the Type 2 photoinitiator.

First, a Type 2 photoinitiator composition comprising a Type 2 photoinitiator and a solvent for the Type 2 photoinitiator is applied to a polyolefin porous substrate (step S1).

According to an embodiment of the present disclosure, the Type 2 photoinitiator may comprise thioxanthone (TX), a thioxanthone derivative, benzophenone (BPO), a benzophenone derivative, or a mixture of two or more of them.

Particular examples of the thioxanthone derivative may include, but are not limited to: 2-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3 -(2-methoxyethoxycarbonyl)-thioxanthone, 4-butoxycarbonyl-thioxanthone, 3-butoxycarbonyl-7-methylthioxanthone, 1-cyano-3-chlorothioxanthone, 1-ethoxycarbonyl-3 -chlorothioxanthone, 1-ethoxycarbonyl-3-ethoxythioxanthone, 1-ethoxycarbonyl-3 -aminothioxanthone, 1-ethoxycarbonyl-3-phenylsulfurylthioxanthone, 3,4-di[2-(2-methoxyethyoxy)ethoxycarbonyl]thioxanthone, 1-ethoxycarbonyl-3-(1-methyl-1-morpholinoethyl)-thioxanthone, 2-methyl-6-dimethoxymethyl-thioxanthone, 2-methyl-6-(1,1-dimethoxy-benzyl)-thioxanthone, 2-morpholinomethylthioxanthone, 2-methyl-6-morpholinomethyl-thioxanthone, N-allylthioxanthone-3,4-dicarboximide, N-octylthioxanthone-3,4-dicarboximide, N-(1,1,3,3-tetramethylbutyl)-thioxanthone-3,4,-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, 2-hydroxy-3-(3,4-dimethyl-9-oxo-9H-thioxanthone-2-yloxy)-N,N,N-trimethyl-1-propanaminium chloride, or the like.

According to the present disclosure, particular examples of the benzophenone derivative may include, but are not limited to: 4-phenylbenzophenone, 4-methoxybenzophenone, 4,4'-dimethoxy-benzophenone, 4,4'-dimethylbenzophenone, 4,4'-dichlorobenzophenone, 4,4'-dimethylaminobenzophenone, 4,4'-diethylaminobenzophenone, 4-methylbenzophenone, 2,4,6-trimethylbenzophenone, 4-(4-methylthiophenyl)-benzophenone, 3,3' -dimethyl-4-methoxy-benzophenone, methyl-2-benzoyl benzoate, 4-(2-hydroxyethylthio)-benzophenone, 4-(4-tolylthio)benzophenone, 4-benzoyl-N,N,N-trimethylbenzenemethanaminium chloride, 2-hydroxy-3-(4-benzoylphenoxy)-N,N,N-trimethyl-propanaminium chloride monohydrate, 4-hydroxybenzophenone, 4-(13-acryloyl-1,4,7,10,13-pentaoxatridecyl)-benzophenone, 4-benzoyl-N,N-dimethyl-N-[2-(1-oxo-2-propenyl)oxy]ethyl-benzenemethaneminium chloride, or the like.

According to the present disclosure, when using the Type 2 photoinitiator, there is an advantage in that crosslinking can be accomplished with a lower light dose as compared to the crosslinking using a Type 1 photoinitiator and/or a crosslinking agent.

According to an embodiment of the present disclosure, the Type 2 photoinitiator may be 2-isopropyl thioxanthone, thioxanthone or a mixture thereof. When the Type 2 photoinitiator is 2-isopropyl thioxanthone, thioxanthone or a mixture thereof, it is possible to carry out crosslinking with a lower light dose, such as 500 mJ/cm$^2$, as compared to the crosslinking using any other photoinitiator, such as benzophenone.

According to an embodiment of the present disclosure, the composition comprising a Type 2 photoinitiator may be prepared by dissolving the Type 2 photoinitiator in a solvent. The solvent may be acetone, isopropyl alcohol (IPA), N-methyl pyrrolidone (NMP), methyl alcohol, or a mixture of two or more of them.

The Type 2 photoinitiator is present in an amount of 0.05-0.3 parts by weight based on 100 parts by weight of the solvent for the Type 2 photoinitiator. When the content of the Type 2 photoinitiator is excessively higher than the above-defined range, rapid crosslinking occurs during UV irradiation to cause shrinking of the separator, and scission of the main chain of polyolefin occurs to cause degradation of mechanical strength. In addition, when the content of the Type 2 photoinitiator is smaller than the above-defined range, crosslinking cannot be performed smoothly even under UV irradiation.

According to an embodiment of the present disclosure, the Type 2 photoinitiator may be present in an amount of 0.05-0.2 parts by weight, or 0.05-0.1 parts by weight, based on 100 parts by weight of the solvent for the Type 2 photoinitiator.

Reference will be made to the above description about the polyolefin porous substrate that may be used in the present disclosure.

According to an embodiment of the present disclosure, the Type 2 photoinitiator composition may be applied to the polyolefin porous substrate by dipping the polyolefin porous substrate in the Type 2 photoinitiator composition, or by applying the Type 2 photoinitiator composition to at least one surface of the polyolefin porous substrate through spray coating, or the like. However, the scope of the present disclosure is not limited thereto. For example, the Type 2 photoinitiator composition may be applied to the polyolefin porous substrate for 0.1 seconds to 5 minutes, but the scope of the present disclosure is not limited thereto. Then, the polyolefin porous substrate coated with the Type 2 photoinitiator composition may be dried. For example, the drying may be carried out at room temperature for 30 seconds to 10 minutes.

After that, UV rays are irradiated to the polyolefin porous substrate coated with the Type 2 photoinitiator composition (step S2).

UV irradiation may be carried out by using a UV curing system, while controlling UV irradiation time and irradiation dose suitably considering the other conditions, such as the weight ratio of photoinitiator. For example, the UV irradiation time and irradiation dose may be set in such a manner that the polyolefin fibrils may be crosslinked sufficiently to provide the polyolefin porous substrate with a meltdown temperature of about 160°C or higher, or 170°C or higher, and the polyolefin porous substrate may not be damaged by the heat generated from a UV lamp. In addition, the UV lamp used in the UV curing system may be selected suitably from a high-pressure mercury lamp, a metal lamp, a gallium lamp or the like, depending on the photoinitiator used for crosslinking, and the light emission wavelength and dose may be selected suitably depending on the overall process.

According to an embodiment of the present disclosure, UV rays may be irradiated to the polyolefin porous substrate coated with the Type 2 photoinitiator composition, wherein the UV light dose may be 10-1000 mJ/cm$^2$, 50-1000 mJ/cm$^2$, or 150-500 mJ/cm$^2$.

According to an embodiment of the present disclosure, 'UV light dose' may be determined by using a portable light dose measuring instrument called H type UV bulb and UV power puck available from Miltec. When light dose is determined by using H type UV bulb available from Miltec, three types of wavelength values of UVA, UVB and UVC are provided depending on wavelength, and UV rays used herein corresponds to UVA.

According to the present disclosure, the method for determining 'UV light dose' includes passing UV power puck through a conveyer in the presence of a light source under the same condition as a sample, and the UV light dose value displayed in UV power puck is defined as 'UV light dose'.

According to an embodiment of the present disclosure, the Type 2 photoinitiator composition may be a composition for forming a porous coating layer further comprising inorganic particles and a binder polymer. Therefore, the method for manufacturing a crosslinked separator may comprise the steps of: preparing a polyolefin porous substrate (step P1); preparing a composition for forming a porous coating layer comprising a Type 2 photoinitiator, a solvent for the Type 2 photoinitiator, inorganic particles and a binder polymer (step P2); coating the composition for forming a porous coating layer to at least one surface of the polyolefin porous substrate (step P3); and irradiating UV rays to the porous coating layer formed on at least one surface of the polyolefin porous substrate (step P4).

First, a polyolefin porous substrate is prepared (step P1). Reference will be made to the above description about the polyolefin porous substrate.

Next, a composition for forming a porous coating layer comprising a Type 2 photoinitiator, a solvent for the Type 2 photoinitiator, inorganic particles and a binder polymer is prepared (step P2).

Reference will be made to the above description about the inorganic particles, the binder polymer and the Type 2 photoinitiator.

The solvent for the Type 2 photoinitiator is one capable of dissolving the Type 2 photoinitiator, and may function as a solvent which dissolves the binder polymer or as a dispersion medium which does not dissolve the binder polymer but disperses the binder polymer, depending on the particular type of the binder polymer.

According to an embodiment of the present disclosure, the solvent for the Type 2 photoinitiator is an organic solvent, and any organic solvent may be used with no particular limitation, as long as it can disperse the inorganic particles, the binder polymer and the Type 2 photoinitiator homogeneously.

Particular examples of the organic solvent may include: cycloaliphatic hydrocarbons, such as cyclopentane and cyclohexane; aromatic hydrocarbons, such as toluene, xylene and ethylbenzene; ketones, such as acetone, ethyl methyl ketone, diisopropyl ketone, cyclohexanone, methylcyclohexane and ethylcyclohexane; chlorinated aliphatic hydrocarbons, such as methylene chloride, chloroform and tetrachlorocarbon; esters, such as ethyl acetate, butyl acetate, γ-butyrolactone and ε-caprolactone; acrylonitriles, such as acetonitrile and propionitrile; ethers, such as tetrahydrofuran and ethylene glycol diethyl ether; alcohols, such as methanol, ethanol, isopropanol, ethylene glycol and ethylene glycol monomethyl ether; and amides, such as N-methyl pyrrolidone and N,N-dimethylformamide. According to an embodiment of the present disclosure, the solvent may include acetone, considering an advantage during a drying process.

Such solvents may be used alone or in combination. Particularly, a solvent having a low boiling point and high volatility is preferred, since it can be removed at low temperature within a short time. Particularly preferred solvents may include acetone, toluene, cyclohexanone, cyclopentane, tetrahydrofuran, cyclohexane, xylene, N-methyl pyrrolidone, or a mixed solvent containing two or more of them.

Preferably, the ratio of the inorganic particles to the binder polymer in the composition for forming a porous coating layer is the same as described above with regard to the porous coating layer.

Herein, the Type 2 photoinitiator is used in an amount of 0.05-0.3 parts by weight, 0.05-0.2 parts by weight, or 0.05-0.1 parts by weight based on 100 parts by weight of the solvent used for preparing a porous coating layer, such as acetone or N-methyl pyrrolidone. When the Type 2 photoinitiator is used within the above-defined range, direct crosslinking of polyolefin may be accomplished by irradiating UV rays with a light dose capable of ensuring mass productivity (i.e. lower light dose as compared to the related art), and a crosslinked separator for a lithium secondary battery comprising such a crosslinked polyolefin substrate may have improved heat resistance. In addition, it is possible to carry out crosslinking suitably with no problems, including shrinking of a separator caused by rapid crosslinking upon UV irradiation and degradation of mechanical strength caused by scission of the main chain of polyolefin.

Then, the composition for forming a porous coating layer is coated on at least one surface of the polyolefin porous substrate (step P3).

According to an embodiment of the present disclosure, there is no particular limitation in the method for forming a porous coating layer by applying the composition for forming a porous coating layer to at least one surface of the polyolefin porous substrate, and particular examples of the method may include dip coating, die coating, roll coating, comma coating, doctor blade coating, reverse roll coating, direct roll coating, or the like.

Phase separation may be carried out to form a pore structure with higher quality in the porous coating layer, and the phase separation may be performed by vapor-induced phase separation or immersion phase separation.

Hereinafter, vapor-induced phase separation will be explained in more detail.

First, vapor-induced phase separation may be carried out at a temperature of 15-70°C or 20-50°C under a relative humidity of 15-80% or 30-50%. While the porous coating layer is dried, after coating the composition for forming a porous coating layer on at least one surface of the polyolefin porous substrate, it has phase transition properties through a vapor-induced phase separation phenomenon, and an interstitial volume structure is formed in the porous coating layer.

To carry out vapor-induced phase separation, a non-solvent may be introduced in a gaseous state. The non-solvent is not particularly limited, as long as it cannot dissolve the binder polymer and has partial miscibility with the solvent. For example, the non-solvent may be water, methanol, ethanol, isopropanol, butanol, or two or more of them.

When a non-solvent is introduced and added in a gaseous state, there are advantages in that phase separation may be carried out by using a small amount of non-solvent and the composition for forming a porous coating layer may be dried with ease.

Herein, the non-solvent in a gaseous state may be added at a temperature of 15-70°C. When the temperature is lower than 15°C, the non-solvent hardly maintains its gaseous state and the composition for forming a porous coating layer is dried at a low rate, resulting in degradation of productivity. When the temperature is higher than 70°C, the solvent and the non-solvent are dried at an excessively high rate, thereby making it difficult to carry out phase separation sufficiently.

In addition, during the phase separation, the non-solvent may be added in such a manner that the vapor pressure of the non-solvent may be 15-80%, or 30-50%, based on the saturated vapor pressure thereof, and then phase separation may be carried out sequentially. When the vapor pressure of the non-solvent is less than 15% based on the saturated vapor pressure thereof, the amount of the non-solvent is too small to carry out phase separation sufficiently. When the vapor pressure of the non-solvent is larger than 80% based on the saturated vapor pressure thereof, phase separation occurs excessively, thereby making it difficult to form a uniform coating layer.

To carry out phase separation by adding a non-solvent in a gaseous state, it is advantageous that the solvent has a low boiling point and thus evaporates with ease. In other words, as the solvent evaporates to reduce the temperature, solvent exchange may occur with ease, while the gaseous non-solvent is condensed. According to an embodiment, when a gaseous non-solvent is added, the solvent may have a boiling point of 30-80°C. In addition, the solvent of the inorganic composition to which the gaseous non-solvent is added may be acetone, methyl ethyl ketone, or a mixture thereof.

Hereinafter, immersion phase separation will be explained in more detail.

To carry out immersion phase separation, the Type 2 photoinitiator and binder polymer are dissolved in a solvent, and inorganic particles are introduced thereto and mixed therewith to prepare a composition for forming a porous coating layer. Then, after coating the composition for forming a porous coating layer on at least one surface of the polyolefin porous substrate, the coated substrate is dipped in a solidifying solution including a suitable non-solvent for a predetermined time. In this manner, the binder polymer is solidified, while phase separation occurs in the coated composition for forming a porous coating layer. In this process, the coating layer including the binder polymer and inorganic particles is converted into a porous layer. After that, the resultant product is washed with water to remove the solidifying solution, followed by drying, to form a porous coating layer integrally on the polyolefin porous substrate. According to an embodiment of the present disclosure, the composition for forming a porous coating layer (including a Type 2 photoinitiator, a solvent for the Type 2 photoinitiator, a binder polymer and inorganic particles) may preferably include the binder polymer at a concentration of 3-10 wt% based on 100 wt% of the composition.

The solvent used for dissolving the binder polymer may be one capable of dissolving the binder polymer to 5 wt% or more, preferably 15 wt% or more, more preferably 25 wt% or more, at 25° C. Non-limiting examples of the solvent may include polar amide solvents, such as N-methyl pyrrolidone, dimethyl acetamide and dimethyl formamide, propanone, cyclopentanone, methyl acetate, gamma-butyrolactone, trimethyl phosphate, triethyl phosphate, and dimethyl ethoxymethane. When the solubility of the binder polymer in the solvent is lower than the above-defined range, there is a problem in that phase separation may proceed excessively.

The non-solvent may be one solubility of the binder polymer of less than 5 wt% at 25°C. The non-solvent may include at least one selected from water, methanol, ethanol, propyl alcohol, butyl alcohol, butanediol, ethylene glycol, propylene glycol, and tripropylene glycol.

As the solidifying solution, the non-solvent may be used alone, or a mixed solvent of the non-solvent with the above-mentioned solvent may be used. When using a mixed solvent of the non-solvent with the solvent, the content of the non-solvent is 95 wt% or more based on 100 wt% of the solidifying solution with a view to formation of a high-quality porous structure and improvement of productivity.

Meanwhile, according to an embodiment of the present disclosure, the binder polymer may be solidified by preparing two or more solidifying solutions, and dipping the separator coated with the composition for forming a porous coating layer sequentially in each of the solidifying solutions for a predetermined time. Herein, a plurality of solidifying solutions may be prepared in such a manner that the concentration of the non-solvent may be increased sequentially as compared to the preceding step. The concentration of the non-solvent in at least the second or later solidifying solution may be higher than the concentration of the non-solvent in the first solidifying solution. For example, the concentration of the non-solvent in the first solidifying solution may be 95 wt% and that of the non-solvent in the later solidifying solution may be controlled to be higher than 95 wt%.

Since the solvent in the coating layer is exchanged with the solidifying solution and the proportion of the non-solvent in the coating layer is increased gradually, while the separator is dipped in the solidifying solution containing an excessive amount of non-solvent, it is preferred to gradually increase the proportion of the non-solvent in a solidifying solution, when the solidification is carried out through a plurality of steps by preparing a plurality of solidifying solutions. Meanwhile, when the non-solvent in the first solidifying solution is 100%, the solidifying solutions after the first run include the non-solvent alone.

According to an embodiment of the present disclosure, the solidifying solution may be maintained at a temperature equal to or higher than 5°C and lower than 20°C. At a temperature lower than the above-defined range, condensation of the non-solvent occurs undesirably. At a temperature higher than the above-defined range, phase separation occurs rapidly so that the coating layer may not have a dense structure. Thus, a desired porous coating layer cannot be formed and the separator has a structure with excessively dense binder polymer at a partial region, which is not preferred in terms of resistance characteristics and realization of adhesion. Meanwhile, when a plurality of solidifying steps is carried out by preparing a plurality of solidifying solutions as mentioned above, the first solidifying solution may be set to a temperature equal to or higher than 5°C and lower than 20°C, and then the temperature of the second or later solidifying solution may be increased sequentially until the drying step is carried out. At least, the second or the later solidifying solution may be prepared to have a temperature higher than the temperature of the first solidifying solution. However, it is preferred to control the temperature of the second or later solidifying solution to a temperature equal to 40°C or lower. At a temperature higher than the above-defined range, evaporation of the non-solvent occurs undesirably. At a temperature lower than the above-defined range, thermal impact occurs upon the introduction to a drying furnace, resulting in a risk of a change in width of the substrate.

Meanwhile, according to an embodiment of the present disclosure, the dipping time may be controlled to 1 minute or less. When the dipping time is larger than 1 minute, phase separation occurs excessively to cause degradation of adhesion between the polyolefin porous substrate and the porous coating layer and separation of the coating layer. Meanwhile, when a plurality of solidifying steps is carried out by preparing a plurality of solidifying solutions as mentioned above, the dipping time in the first solidifying solution may be controlled to 3-25 seconds.

According to an embodiment of the present disclosure, after carrying out the phase separation step, a drying step may be carried out. The drying step may be carried out by using a known process, and may be performed in a batchwise or continuous mode by using an oven or a heating chamber in a temperature range considering the vapor pressure of the solvent used herein. The drying step is for substantially removing the solvent present in the composition, and is preferably carried out as rapidly as possible considering productivity, or the like. For example, the drying step may be carried out for 1 minute or less, or 30 seconds or less.

The porous coating layer may be formed on both surfaces of the polyolefin porous substrate or selectively on only one surface of the polyolefin porous substrate.

Then, UV rays are irradiated to the porous coating layer formed on at least one surface of the polyolefin porous substrate (step P4).

Before UV rays are irradiated to the separator, the composition for forming a porous coating layer comprising a Type 2 photoinitiator is applied, and thus the Type 2 photoinitiator is distributed on the fibril surfaces of the polyolefin porous substrate. Then, UV rays are irradiated, and the polyolefin chains are crosslinked directly on the fibril surfaces of the polyolefin porous substrate by the Type 2 photoinitiator present on the surface of the porous substrate.

According to an embodiment of the present disclosure, UV rays may be irradiated to the composition for forming a porous coating layer coated on at least one surface of the porous polyolefin substrate, wherein the UV light dose may be 10-1000 mJ/cm$^2$, 50-1000 mJ/cm$^2$, or 150-500 mJ/cm$^2$.

According to an embodiment of the present disclosure, when using 2-isopropyl thioxanthone (ITX) as a Type 2 photoinitiator, ITX has a low melting point of about 70-80°C. Therefore, when controlling the UV curing temperature condition to 80-100°C, mobility of the photoinitiator into the substrate may occur, while ITX on the polyolefin porous substrate may be melted, and thus curing efficiency can be increased and a change in physical properties of the crosslinked separator can be prevented.

The crosslinked separator for a lithium secondary battery according to the present disclosure may be interposed between a positive electrode and a negative electrode to provide an electrochemical device.

The electrochemical device includes any device which carries out electrochemical reaction, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium ion secondary batteries, lithium polymer secondary batteries or lithium ion polymer batteries, are preferred.

The electrodes used in combination with the separator according to the present disclosure are not particularly limited, and may be obtained by allowing electrode active materials to be bound to an electrode current collector through a method generally known in the art.

Among the electrode active materials, non-limiting examples of a positive electrode active material include conventional positive electrode active materials that may be used for the positive electrodes for conventional electrochemical devices. Particularly, lithium manganese oxides, lithium cobalt oxides, lithium nickel oxides, lithium iron oxides or lithium composite oxides containing a combination thereof are used preferably.

Non-limiting examples of a negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, are used preferably. Non-limiting examples of a positive electrode current collector include foil made of aluminum, nickel or a combination thereof. Non-limiting examples of a negative electrode current collector include foil made of copper, gold, nickel, copper alloys or a combination thereof.

According to an embodiment of the present disclosure, the electrolyte that may be used in the electrochemical device according to the present disclosure is a salt having a structure of $A^+B^-$, wherein $A^+$ includes an alkali metal cation such as $Li^+$, $Na^+$, $K^+$ or a combination thereof, and $B^-$ includes an anion such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, $C(CF_2SO_2)_3^-$ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone ($\gamma$-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

According to an embodiment of the present disclosure, the crosslinked separator for a lithium secondary battery may be applied to a battery through lamination, stacking and folding of the crosslinked separator with electrodes, besides a conventional process, winding.

According to an embodiment of the present disclosure, the crosslinked separator for a lithium secondary battery may be interposed between the positive electrode and the negative electrode. When an electrode assembly is formed by assembling a plurality of cells or electrodes, the crosslinked separator may be interposed between the adjacent cells or electrodes. The electrode assembly may have various structures, such as a simple stack type, jelly-roll type, stacked-folded type, laminated-stacked type, or the like.

Examples will be described more fully hereinafter so that the present disclosure can be understood with ease. The following examples may, however, be embodied in many different forms and the scope of the present invention should not be construed as limited to the exemplary embodiments set forth therein. Rather, these exemplary embodiments are provided so that the present disclosure will be thorough and complete, and will fully convey the scope of the present disclosure to those skilled in the art.

**Example 1**

A polyethylene porous film (available from Toray, porosity: 45%) having a thickness of 9 $\mu$m was prepared as a polyolefin porous substrate.

As a Type 2 photoinitiator, 2-isopropylthioxanthone (ITX, available from Sigma Aldrich) was prepared.

As a UV light source, a high-pressure mercury lamp (high-temperature mercury lamp available from Lichtzen, LH-250/800-A) was prepared.

The Type 2 photoinitiator was dissolved in acetone as a solvent to prepare a Type 2 photoinitiator composition including 0.05 parts by weight of the Type 2 photoinitiator based on 100 parts by weight of acetone.

The polyolefin porous substrate was dipped in the Type 2 photoinitiator composition for 30 seconds and removed therefrom, followed by drying at room temperature (25°C) for 1 minute.

Then, UV rays were irradiated to the top surface of the polyolefin porous substrate coated with the Type 2 photoinitiator composition with an integrated light dose, i.e. UV irradiation light dose of 500 mJ/cm$^2$, wherein UV irradiation intensity was set to 80% of the UV light source and the line speed was set to 10 m/min.

In this manner, a crosslinked separator for a lithium secondary battery comprising a crosslinked polyolefin porous substrate including a plurality of fibrils and pores formed by the fibrils entangled with one another was obtained, wherein the polyethylene chains forming the fibrils are crosslinked directly with one another.

**Example 2**

A crosslinked separator for a lithium secondary battery was obtained in the same manner as Example 1, except that thioxanthone (available from TCI) was used instead of 2-isopropyl thioxanthone (available from Sigma Aldrich).

**Example 3**

A crosslinked separator for a lithium secondary battery was obtained in the same manner as Example 1, except that 0.1 parts by weight of benzophenone (available from Sigma Aldrich) was used, instead of 2-isopropyl thioxanthone (available from Sigma Aldrich), based on 100 parts by weight of acetone, and UV rays were irradiated to the polyethylene porous substrate with an integrated light dose of 500 mJ/cm$^2$.

**Example 4**

A crosslinked separator for a lithium secondary battery was obtained in the same manner as Example 1, except that 0.1 parts by weight of 4-hydroxybenzophenone (available from Sigma Aldrich) was used, instead of 2-isopropyl thioxanthone (available from Sigma Aldrich), based on 100 parts by weight of acetone, and UV rays were irradiated to the polyethylene porous substrate with an integrated light dose of 500 mJ/cm$^2$.

**Example 5**

A polyethylene porous film (available from Toray, porosity: 45%) having a thickness of 9 $\mu$m was prepared as a polyolefin porous substrate.

As inorganic particles, Al$_2$O$_3$ powder having a D$_{50}$ particle diameter of 500 nm mixed with γ-AlOOH powder having a D$_{50}$ particle diameter of 250 nm at a weight ratio of 9:1 was prepared. As used herein, 'particle diameter, D$_{50}$' means the particle diameter at the point of 50% in the particle number accumulated distribution depending on particle diameter. In other words, D$_{50}$ is the particle diameter at the point of 50% in the particle number accumulated distribution as a function of particle diameter, and may be determined by using the laser diffraction method. Particularly, powder to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated. Then, D$_{50}$ may be determined by calculating the particle diameter at the point of 50% in the particle number accumulated distribution depending on particle diameter in the analyzer. As a binder polymer, polyvinylidene fluoride (PVDF) was prepared.

As a Type 2 photoinitiator, thioxanthone (available from Sigma Aldrich) was prepared.

As a UV light source, a high-pressure mercury lamp (high-temperature mercury lamp available from Lichtzen, LH-250/800-A) was prepared.

The binder polymer was added to acetone as a solvent and dissolved therein at 50°C for about 4 hours. The inorganic particles were added to the resultant solution in such a manner that the weight ratio of the binder polymer and total inorganic particles is 1:4. Then, cyanoethyl polyvinyl alcohol as a dispersing agent was added thereto to a 2 wt% based on the content of the total inorganic particles, and the Type 2 photoinitiator was added in an amount of 0.05 parts by weight based on 100 parts by weight of acetone. After that, the inorganic particles were pulverized and dispersed by using a ball mill for 12 hours to prepare a composition for forming a porous coating layer. Herein, the ratio of the solvent and solid content was 4:1.

The composition for forming a porous coating layer was coated on both surfaces of the polyethylene porous substrate having a size of 6 cm x 15 cm through dip coating at 23°C under a relative humidity of 42% to a total coating amount of 13.5 g/m$^2$, and then the coated polyethylene porous substrate was dried at 23°C for 1 minute.

Then, UV rays were irradiated to the porous coating layers formed on both surfaces of the polyolefin porous substrate by using the high-pressure mercury lamp (high-temperature mercury lamp available from Lichtzen, LH-250/800-A) with an integrated light dose of 500 mJ/cm$^2$, wherein UV irradiation intensity was set to 80% of the UV light source and the line speed was set to 10 m/min. In this manner, a crosslinked separator for a lithium secondary battery comprising a crosslinked polyolefin porous substrate; and porous coating layers formed on both surfaces of the crosslinked polyolefin porous substrate was obtained.

The porous coating layers include interstitial volumes formed by the inorganic particles that are substantially in contact with one another, wherein the interstitial volumes mean spaces defined by the inorganic particles that are substantially in contact with one another in a closely packed or densely packed structure of the inorganic particles, and the interstitial volumes among the inorganic particles become vacant spaces forming pores of the porous coating layer.

**Example 6**

A polyethylene porous film (available from Toray, porosity: 45%) having a thickness of 9 $\mu$m was prepared as a polyolefin porous substrate.

As inorganic particles, $Al_2O_3$ powder having a $D_{50}$ particle diameter of 500 nm mixed with $\gamma$-AlOOH powder having a $D_{50}$ particle diameter of 250 nm at a weight ratio of 9:1 was prepared. As a binder polymer, polyvinylidene fluoride (PVDF) was prepared.

As a Type 2 photoinitiator, 2-isopropyl thioxanthone (available from Sigma Aldrich) was prepared.

As a UV light source, a high-pressure mercury lamp (high-temperature mercury lamp available from Lichtzen, LH-250/800-A) was prepared.

The binder polymer was added to acetone as a solvent and dissolved therein at 50°C for about 4 hours. The inorganic particles were added to the resultant solution in such a manner that the weight ratio of the binder polymer and total inorganic particles is 1:4. Then, cyanoethyl polyvinyl alcohol as a dispersing agent was added thereto to a 2 wt% based on the content of the total inorganic particles, and the Type 2 photoinitiator was added in an amount of 0.1 parts by weight based on 100 parts by weight of acetone. After that, the inorganic particles were pulverized and dispersed by using a ball mill for 12 hours to prepare a composition for forming a porous coating layer. Herein, the ratio of the solvent and solid content was 4:1.

The composition for forming a porous coating layer was coated on both surfaces of the polyethylene porous film having a size of 6 cm x 15 cm through dip coating at 23°C under a relative humidity of 42% to a total coating amount of 13.5 g/m$^2$, and then the coated polyethylene porous substrate was dipped sequentially in the first solidifying bath and the second solidifying bath to solidify the composition for forming a porous coating layer. The first solidifying bath included a solidifying solution containing NMP as a solvent and water as a non-solvent mixed at a weight ratio of 5:95, the temperature of the solidifying solution was controlled at 15°C, and the dipping time was 10 seconds. The second solidifying bath included a solidifying solution consisting of water as a non-solvent alone, the temperature of the solidifying solution was controlled at 23°C, and the dipping time was 30 seconds. After the porous coating layer was solidified, it was removed from the solidifying solution, and the solvent and the non-solvent remaining on the porous coating layer were dried at the same time.

Then, UV rays were irradiated to the porous coating layers formed on both surfaces of the polyolefin porous substrate by using the high-pressure mercury lamp (high-temperature mercury lamp available from Lichtzen, LH-250/800-A) with an integrated light dose of 500 mJ/cm$^2$. In this manner, a crosslinked separator for a lithium secondary battery comprising a crosslinked polyolefin porous substrate; and porous coating layers formed on both surfaces of the crosslinked polyolefin porous substrate was obtained.

**Example 7**

A crosslinked separator for a lithium secondary battery was obtained in the same manner as Example 1, except that a Type 2 photoinitiator composition including 0.1 parts by weight of the Type 2 photoinitiator based on 100 parts by weight of acetone was used.

**Example 8**

A crosslinked separator for a lithium secondary battery was obtained in the same manner as Example 1, except that a Type 2 photoinitiator composition including 0.15 parts by weight of the Type 2 photoinitiator based on 100 parts by weight of acetone was used.

**Example 9**

A crosslinked separator for a lithium secondary battery was obtained in the same manner as Example 1, except that a Type 2 photoinitiator composition including 0.2 parts by weight of the Type 2 photoinitiator based on 100 parts by weight of acetone was used.

**Example 10**

A crosslinked separator for a lithium secondary battery was obtained in the same manner as Example 1, except that a Type 2 photoinitiator composition including 0.3 parts by weight of the Type 2 photoinitiator based on 100 parts by weight of acetone was used.

**Comparative Example 1**

A polyethylene porous film (available from Toray, porosity: 45%) having a thickness of 9 μm was used as it was without any treatment, as a separator for a lithium secondary battery.

**Comparative Example 2**

As a composition for photocuring, a photocurable composition was prepared by preparing diphenyl (2,4,6-trimethylbenzoyl)-phosphine oxide (TPO) (available from Sigma Aldrich) and tris(2-acryloxyethyl)isocyanurate (TEICTA, available from Sigma Aldrich), and dissolving each of them in acetone in an amount of 0.3 parts by weight respectively based on 100 parts by weight of acetone.

As a polyolefin porous substrate, a polyethylene porous film (available from Toray, porosity: 45%) having a thickness of 9 μm was prepared.

The polyethylene porous substrate was dipped in the photocurable composition for 30 seconds and removed therefrom, followed by drying at room temperature (25°C) for 1 minute.

Then, UV rays were irradiated to the top surface of the polyolefin porous substrate coated with the photocurable composition by using a high-pressure mercury lamp (high-temperature mercury lamp available from Lichtzen, LH-250/800-A) with an integrated light dose of 1500 mJ/cm$^2$. In this manner, a crosslinked separator for a lithium secondary battery including a crosslinked polyolefin porous film was obtained.

**Comparative Example 3**

A crosslinked separator for a lithium secondary battery including a crosslinked polyolefin porous film was obtained in the same manner as Comparative Example 2, except that phenyl bis(2,4,6-trimethylbenzoyl)phosphine oxide (Irgacure 819) was used instead of diphenyl (2,4,6-trimethylbenzoyl)phosphine oxide (TPO) (available from Sigma Aldrich) in the ingredients used for the photocurable composition.

**Comparative Example 4**

A crosslinked separator for a lithium secondary battery including a crosslinked polyolefin porous film was obtained in the same manner as Comparative Example 2, except that phenyl bis(2,4,6-trimethylbenzoyl)phosphine oxide (Irgacure 819) was used in an amount of 0.3 parts by weight based on 100 parts by weight of acetone, and tris(2-acryloxyethyl)isocyanurate (TEICTA, available from Sigma Aldrich) was used in an amount of 0.6 parts by weight based on 100 parts by weight of acetone in the ingredients used for the photocurable composition.

**Comparative Example 5**

A crosslinked separator for a lithium secondary battery including a crosslinked polyolefin porous film was obtained in the same manner as Comparative Example 2, except that phenyl bis(2,4,6-trimethylbenzoyl)phosphine oxide (Irgacure 819) was used alone in an amount of 0.3 parts by weight based on 100 parts by weight of acetone in the ingredients used for the photocurable composition.

**Comparative Example 6**

A crosslinked separator for a lithium secondary battery including a crosslinked polyolefin porous film was obtained in the same manner as Example 1, except that a photocurable composition including 0.3 parts by weight of phenyl bis(2,4,6-trimethylbenzoyl)phosphine oxide (Irgacure 819) based on 100 parts by weight of acetone, 0.6 parts by weight of tris(2-acryloxyethyl)isocyanurate (TEICTA, available from Sigma Aldrich) based on 100 parts by weight of acetone, and 0.1 parts by weight of thioxanthone (available from TCI) based on 100 parts by weight of acetone was used, instead of the Type 2 photoinitiator composition.

**Comparative Example 7**

Electron beams were irradiated to a polyethylene porous film (available from Toray, porosity: 45%) having a thickness of 9 $\mu$m from E-beam (EB TECH Co., LTD.) at a dose of 200 kGy to obtain a crosslinked separator for a lithium secondary battery including a crosslinked polyolefin porous film. Herein, 200 kGy of electron beams corresponds to a dose with which crosslinking can occur.

**Comparative Example 8**

A separator for a lithium secondary battery was obtained in the same manner as Example 5, except that thioxanthone was not added to the composition for forming a porous coating layer of Example 5 and UV irradiation was not carried out.

**Comparative Example 9**

A separator for a lithium secondary battery was obtained in the same manner as Example 6, except that 2-isopropylthioxanthone was not added to the composition for forming a porous coating layer of Example 6 and UV irradiation was not carried out.

**Comparative Example 10**

A separator for a lithium secondary battery was obtained in the same manner as Example 5, except that 0.3 parts by weight of phenyl bis(2,4,6-trimethylbenzoyl)phosphine oxide (Irgacure 819) based on 100 parts by weight of acetone and 0.6 parts by weight of tris (2-acryloxyethyl)isocyanurate (TEICTA) (available from Sigma Aldrich) based on 100 parts by weight of acetone were used instead of 0.05 parts by weight of thioxanthone in the composition for forming a porous coating layer of Example 5, and UV rays were irradiated with an integrated light dose of 1500 mJ/cm$^2$.

**Comparative Example 11**

A separator for a lithium secondary battery was obtained in the same manner as Example 1, except that 0.5 parts by weight of thioxanthone (available from TCI) based on 100 parts by weight of acetone was used, instead of 2-isopropyl thioxanthone (available from Sigma Aldrich).

**Comparative Example 12**

A separator for a lithium secondary battery was obtained in the same manner as Example 1, except that 0.5 parts by weight of 2-isopropyl thioxanthone based on 100 parts by weight of acetone was used.

**Test Example 1: Evaluation of Properties of Separator Including Porous Substrate Alone**

Each of the separators manufactured in Examples 1-4, Comparative Examples 1-7 and Comparative Example 11 was determined in terms of air permeability, porosity, weight per unit area, crosslinking degree, meltdown temperature, tensile strength (MD/TD), a change in tensile strength in the machine direction (MD), puncture strength, a change in puncture strength, high-temperature shrinkage at 120°C (MD/TD), and electrical resistance. The results are shown in the following Table 1.

(1) Evaluation of Air Permeability

Air permeability (Gurley) was determined according to the method of ASTM D726-94. Gurley used herein refers to the resistance of a separator against air flow and was determined by using Gurley densometer. The air permeability value defined herein is expressed by the time (second), i.e. air permeation time, required for 100 cc of air to pass through the section of 1 in$^2$ of a separator under a pressure of 12.2 in H$_2$O.

(2) Evaluation of Porosity

Porosity was determined by measuring the width/length/thickness of a separator to calculate the volume, measuring the weight, and then calculating the ratio of the volume 100% of which is occupied by the separator based on the weight.

$$\text{Porosity (\%)} = 100 \times (1 - \text{separator sample weight} / (\text{width of separator sample (50}$$

$$\text{mm)} \times \text{length of separator sample (50 mm)} \times \text{thickness} \times \text{density of separator)})$$

(3) Evaluation of Weight per Unit Area

Weight per unit area ($g/m^2$) was evaluated by preparing a sample having a size of width $\times$ length of 1 m $\times$ 1 m and measuring the weight of the sample.

(4) Evaluation of Crosslinking Degree

Crosslinking degree was evaluated according to ASTM D2765 by dipping a polyolefin porous substrate in a xylene solution at 135°C, boiling the substrate for 12 hours, measuring the weight of the residue, and calculating the percentage of the weight of the residue based on the initial weight.

(5) Evaluation of Meltdown Temperature

Meltdown temperature was determined by taking each of the samples in the machine direction (MD) and the transverse direction (TD) and analyzing each sample through thermomechanical analysis (TMA). Particularly, a sample having a size of width $\times$ length of 4.5 mm $\times$ 8 mm was introduced to a TMA instrument (TA Instrument, Q400) and warmed from a temperature of 30°C to 220°C at a heating rate of 5°C/min, while applying a tension of 0.01 N thereto. As the temperature was increased, the sample showed a change in length. Then, the temperature at which point the sample was broken after a rapid increase in length was measured. Herein, meltdown temperature was measured in the machine direction (MD).

(6) Evaluation of Tensile Strength in Machine Direction and Transverse Direction and Change in Tensile Strength in Machine Direction

A specimen having a size of 100 mm $\times$ 15 mm was prepared.
According to ASTM D882, the specimen was drawn in each of the machine direction and the transverse direction at a rate of 50 mm/min by using Universal Testing Systems (Instron® 3345), and the strength at the break point was defined as tensile strength in each of the machine direction and the transverse direction.
In addition, a change in tensile strength in the machine direction was calculated according to the following formula. In the following formula, 'non-crosslinked separator including polyolefin porous substrate before crosslinking' corresponds to Comparative Example 1.

$$\text{Change (\%) in tensile strength in machine direction} = [(\text{Tensile strength in}$$

$$\text{machine direction of non-crosslinked separator including polyolefin porous substrate}$$

$$\text{before crosslinking)} - (\text{Tensile strength in machine direction of crosslinked separator}$$

$$\text{including polyolefin porous substrate after crosslinking)}] / (\text{Tensile strength in machine}$$

$$\text{direction of non-crosslinked separator including polyolefin porous substrate before}$$

$$\text{crosslinking)} \times 100$$

(7) Evaluation of Puncture Strength and Change in Puncture Strength

A specimen having a size of 50 mm x 50 mm was prepared.
According to ASTM D2582, a round tip having a diameter of 1 mm was allowed to operate at a rate of 120 mm/min, and puncture strength was determined.
In addition, a change in puncture strength was calculated according to the following formula. In the following formula, 'non-crosslinked separator including polyolefin porous substrate before crosslinking' corresponds to Comparative Example 1.

$$\text{Change (\%) in puncture strength} = [(\text{Puncture strength of non-crosslinked}$$

$$\text{separator including polyolefin porous substrate before crosslinking}) - (\text{Puncture strength of}$$

$$\text{crosslinked separator including polyolefin porous substrate after crosslinking})] / (\text{Puncture}$$

$$\text{strength of non-crosslinked separator including polyolefin porous substrate before}$$

$$\text{crosslinking}) \times 100$$

(8) Evaluation of High-Temperature Shrinkage at 120°C

High-temperature shrinkage was calculated by cutting each of the separators of Examples 1-4, Comparative Examples 1-7 and Comparative Example 11 into a size of 50 mm (length) x 50 mm (width) to prepare a specimen, allowing the specimen to stand in an oven heated to 120°C for 30 minutes, recovering the specimen, and measuring a change in length in the machine direction and the transverse direction:

$$\text{High-temperature shrinkage (\%) at } 120°C = [(\text{Dimension before shrinking} -$$

$$\text{Dimension after shrinking}) / \text{Dimension before shrinking}] \times 100$$

(9) Evaluation of Electrical Resistance

Electrical resistance was determined by manufacturing a coin cell by using each of the separators of Examples 1-4, Comparative Examples 1-7 and Comparative Example 11, allowing each coin cell to stand at room temperature for 1 day, and then measuring the electrical resistance of each separator using impedance analysis. The coin cell was manufactured as follows.

Manufacture of Negative Electrode

First, artificial graphite as a negative electrode active material, denka black (carbon black) as a conductive material and polyvinylidene fluoride (PVDF) as a binder were mixed at a weight ratio of 75:5:20, and N-methyl pyrrolidone as a solvent was added to the resultant mixture to prepare negative electrode slurry.
The negative electrode slurry was coated on a copper current collector to a loading amount of 3.8 mAh/cm$^2$, followed by drying, to obtain a negative electrode.

Manufacture of Positive Electrode

First, $LiCoO_2$ as a positive electrode active material, denka black as a conductive material and polyvinylidene fluoride (PVDF) as a binder were mixed at a weight ratio of 85:5:10, and the resultant mixture was added to N-methyl pyrrolidone (NMP) as a solvent to prepare positive electrode active material slurry. The positive electrode active material slurry was coated on a sheet-like aluminum current collector, followed by drying, to form a positive electrode active material layer to a final positive electrode loading amount of 3.3 mAh/cm$^2$.

Manufacture of Coin Cell

The separator of each of Examples and Comparative Examples was interposed between the negative electrode and the positive electrode obtained as described above, and a non-aqueous electrolyte (1 M $LiPF_6$, ethylene carbonate (EC)/propylene carbonate (PC)/diethyl carbonate (DEC), volume ratio = 3:3:4) was injected thereto to obtain a coin cell.

[Table 1]

| | Ex.1 | Ex.2 | Ex.3 | Ex.4 | Comp Ex.1 | Comp Ex.2 | Comp Ex.3 | Comp Ex.4 | Comp Ex.5 | Comp. Ex.6 | Comp Ex.7 | Comp Ex.11 |
|---|---|---|---|---|---|---|---|---|---|---|---|---|
| Type of crosslinking additive and content of crosslinking additive based on 100 parts by weight of acetone | ITX 0.05 parts by weight | TX 0.05 parts by weight | BPO 0.1 parts by weight | 4-hydroxyBPO 0.1 parts by weight | - | TPO/TEICTA= 0.3 parts by weight/0.3 parts by weight | 819/TEICTA = 0.3 parts by weight/0.3 parts by weight | 819/TEICTA = 0.3 parts by weight/0.6 parts by weight | 819 0.3 parts by weight | 819/TEICTA/TX = 0.3 parts by weight/0.6 parts by weight/0.1 parts by weight | - | TX 0.5 parts by weight |
| UV irradiation condition (mJ/cm²) | 500 | 500 | 500 | 500 | - | 1500 | 1500 | 1500 | 1500 | 500 | E-beam crosslinking dose 200 kGy | 500 |
| Thickness (μm) | 9.6 | 9.6 | 9.6 | 9.7 | 9.6 | 9.6 | 9.6 | 9.6 | 9.6 | 9.7 | 9.6 | 9.6 |
| Air permeability (s/100 mL) | 73 | 72 | 72 | 73 | 72 | 76 | 75 | 78 | 74 | 79 | 73 | 73 |
| Porosity (%) | 51 | 51 | 50 | 50 | 51 | 49 | 50 | 48 | 50 | 48 | 51 | 50 |
| Weight per unit area (g/m²) | 4.3 | 4.3 | 4.3 | 4.3 | 4.3 | 4.6 | 4.5 | 4.7 | 4.4 | 4.7 | 4.3 | 4.4 |
| Crosslinking degree (%) | 50 | 48 | 30 | 32 | 0 | 12 | 19 | 21 | 13 | 54 | 18 | 8 |
| Meltdown temperature (°C) | 198 | 197 | 175 | 176 | 145 | 163 | 171 | 171 | 164 | 204 | 172 | 189 |
| Tensile strength (kgf/cm²) MD | 1850 | 1840 | 1820 | 1840 | 1860 | 1860 | 1800 | 1780 | 1800 | 1790 | 1000 | 1420 |
| Tensile strength (kgf/cm²) TD | 1350 | 1300 | 1300 | 1330 | 1320 | 1300 | 1310 | 1320 | 1300 | 1280 | 820 | 980 |
| Change (%) in tensile strength in MD | 0.54 | 1.08 | 2.15 | 1.08 | - | 0 | 3.23 | 4.3 | 3.23 | 3.76 | 46.2 | 23.7 |
| Puncture strength (gf/15 mm) | 418 | 420 | 413 | 415 | 425 | 420 | 425 | 415 | 413 | 416 | 325 | 345 |
| Change (%) in puncture strength | 1.65 | 1.18 | 2.82 | 2.35 | - | 1.18 | 0 | 2.35 | 2.82 | 2.12 | 23.5 | 18.8 |

(continued)

| | | Ex.1 | Ex.2 | Ex.3 | Ex.4 | Comp Ex.1 | Comp Ex. 2 | Comp Ex. 3 | Comp Ex. 4 | Comp Ex.5 | Comp. Ex.6 | Comp Ex.7 | Comp Ex.11 |
|---|---|---|---|---|---|---|---|---|---|---|---|---|---|
| High-temperature shrinkage (%) at 120°C | MD | 3.2 | 3.2 | 5.0 | 5.6 | 13 | 6.1 | 7.1 | 7.1 | 9.0 | 3.0 | 6.5 | 3.0 |
| | TD | 9.0 | 9.1 | 16 | 15 | 32 | 23 | 22 | 22 | 25 | 8.2 | 12/0 | 8.0 |
| Electrical resistance (Ω) | | 0.32 | 0.33 | 0.33 | 0.35 | 0.31 | 0.41 | 0.44 | 0.48 | 0.39 | 0.49 | 0.31 | 0.40 |

Referring to Table 1, it can be seen that each of the crosslinked separators manufactured in Examples 1-4 has a significantly improved crosslinking degree, meltdown temperature and high-temperature shrinkage and safety at 120°C, while showing little or no difference in terms of thickness, air permeability, porosity, weight per unit area, tensile strength, puncture strength and electrical resistance, as compared to the non-crosslinked separator according to Comparative Example 1.

Meanwhile, the crosslinked separators manufactured in Comparative Examples 2-4 accomplish curing, only when a high light dose of 1500 mJ/cm$^2$ is irradiated, and show significant deterioration in terms of crosslinking degree, high-temperature shrinkage at 120°C and electrical resistance, as compared to Examples 1-4.

Comparative Example 5 accomplished crosslinking, even when using a Type 1 initiator alone. However, it can be seen that Comparative Example 5 has a low crosslinking degree and shows significant deterioration in terms of high-temperature shrinkage at 120°C and electrical resistance, as compared to Examples 1-4.

Comparative Example 6, when using a Type 1 initiator, curing agent and a Type 2 initiator, accomplished curing with a light dose at a level similar to the light dose in Examples 1-4. However, it can be seen that Comparative Example 6 shows deterioration in terms of air permeability and electrical resistance, as compared to Examples 1-4.

It can be seen that Comparative Example 7, when E-beams are irradiated, shows a lower crosslinking degree and significantly deteriorated tensile strength as compared to Examples 1-4.

It is shown that Comparative Example 11 causes significant deterioration in tensile strength of the crosslinked separator, since the content of the Type 2 photoinitiator is larger than 0.3 parts by weight based on 100 parts by weight of the solvent.

**Test Example 2: Evaluation of Properties of Separator Including Porous Coating Layer**

Each of the separators manufactured in Examples 5 and 6 and Comparative Examples 8-10 was determined in terms of air permeability, meltdown temperature, tensile strength, a change in tensile strength in the machine direction, puncture strength, and a change in puncture strength. The results are shown in the following Table 2.

Reference will be made to the above description in Test Example 1 about the methods for determining air permeability, meltdown temperature, puncture strength, and a change in puncture strength.

In Example 5, reference will be made to the above description in Test Example 1 about the methods for determining tensile strength and a change in tensile strength in the machine direction. Herein, it should be understood that 'non-crosslinked separator including polyolefin porous substrate before crosslinking' corresponds to Comparative Example 8.

In Example 6, reference will be made to the above description in Test Example 1 about the methods for determining tensile strength and a change in tensile strength in the machine direction. Herein, it should be understood that 'non-crosslinked separator including polyolefin porous substrate before crosslinking' corresponds to Comparative Example 9.

[Table 2]

| | | Ex.5 | Ex.6 | Comp.Ex. 8 | Comp.Ex. 9 | Comp.Ex.10 |
|---|---|---|---|---|---|---|
| Type of crosslinking additive and content of crosslinking additive based on 100 parts by weight of acetone | | TX 0.05 parts by weight | ITX 0.1 parts by weight | - | - | 819/TEICTA = 0.3 parts by weight/0.6 parts by weight |
| UV irradiation condition (mJ/cm$^2$) | | 500 | 500 | - | - | 1500 |
| Thickness ($\mu$m) | | 18.0 | 13.5 | 17.5 | 13.4 | 17.8 |
| Air permeability (s/100 mL) | | 172 | 75 | 182 | 76 | 178 |
| Meltdown temperature (°C) | | >200 | 193 | 146 | 146 | 164 |
| Tensile strength (kgf/cm$^2$) | MD | 1020 | 1300 | 1030 | 1300 | 1000 |
| | TD | 760 | 960 | 1330 | 950 | 1320 |
| Change (%) in tensile strength in MD | | 0.97 | 0 | - | - | 2.91 |
| Puncture strength (gf/15 mm) | | 420 | 410 | 423 | 425 | 420 |
| Change (%) in puncture strength | | 1.18 | 3.53 | 0.47 | 0 | 1.18 |

Referring to Table 2, the crosslinked separators manufactured in Examples 5 and 6 show a significantly improved meltdown temperature, as compared to the non-crosslinked separators in which photoinitiator was not used and crosslinking was not accomplished according to Comparative Examples 8 and 9, and also show a significantly improved meltdown temperature as compared to Comparative Example 10 using a photocuring agent.

In addition, in the case of Comparative Example 10, it can be seen that the meltdown temperature is further deteriorated as compared to Comparative Example 4. It is thought that the above result is derived from a low UV transmission of the porous coating layer and insufficient crosslinking of the porous substrate.

**Test Example 3: Determination of Cause of Improvement in Meltdown Temperature**

Each of the heat shrinkage ('Graph 1') of the crosslinked separator manufactured in Example 5, heat shrinkage ('Graph 2') of a substrate obtained by removing the porous coating layer from the crosslinked separator manufactured in Example 5 by using a Scotch tape, and the heat shrinkage ('Graph 3') of the substrate from which the porous coating layer was removed, after washing it with acetone sufficiently, was determined. The results are shown in FIG. 1.

It can be seen from FIG. 1 that the substrate obtained after removing the porous coating layer causes no significant change in heat shrinkage. Therefore, it can be inferred that the heat resistance of the crosslinked separator is derived from the crosslinked polyolefin porous substrate.

**Test Example 4: Determination of Change in Mechanical Strength of Separator Depending on Type 2 Photoinitiator Content**

Each of the separators manufactured in Examples 1 and 7-10, and Comparative Examples 1 and 12 was determined in terms of air permeability, porosity, weight per unit area, crosslinking degree, meltdown temperature, tensile strength, a change in tensile strength in the machine direction, puncture strength and a change in puncture strength. The results are shown in the following Table 3.

Reference will be made to the above description about method for determining permeability, porosity, weight per unit area, crosslinking degree, meltdown temperature, tensile strength, a change in tensile strength in the machine direction, puncture strength and a change in puncture strength in Test Example 1.

[Table 3]

| | | Ex.1 | Ex.7 | Ex.8 | Ex.9 | Ex.10 | Comp. Ex.1 | Comp. Ex.12 |
|---|---|---|---|---|---|---|---|---|
| Content of Type 2 photoinitiator based on 100 parts by weight of solvent | | 0.05 parts by weight | 0.1 parts by weight | 0.15 parts by weight | 0.2 parts by weight | 0.3 parts by weight | - | 0.5 parts by weight |
| UV irradiation condition (mJ/cm$^2$) | | 500 | 500 | 500 | 500 | 500 | 500 | 500 |
| Thickness ($\mu$m) | | 9.6 | 9.6 | 9.6 | 9.6 | 9.6 | 9.6 | 9.7 |
| Air permeability (s/100 mL) | | 73 | 73 | 73 | 74 | 74 | 72 | 78 |
| Porosity (%) | | 51 | 51 | 51 | 51 | 51 | 51 | 50 |
| Weight per unit area (g/m$^2$) | | 4.3 | 4.3 | 4.3 | 4.3 | 4.3 | 4.3 | 4.4 |
| Crosslinking degree (%) | | 50 | 55 | 56 | 55 | 55 | 0 | 35 |
| Meltdown temperature (°C) | | 198 | 204 | 210 | 200 | 198 | 145 | 185 |
| Tensile strength (kgf/cm$^2$) | MD | 1850 | 1830 | 1815 | 1780 | 1720 | 1860 | 1450 |
| | TD | 1350 | 1330 | 1320 | 1270 | 1250 | 1320 | 1045 |
| Change (%) in tensile strength in MD | | 0.54 | 1.61 | 2.42 | 4.30 | 7.53 | - | 22 |
| Puncture strength (gf/15 mm) | | 418 | 410 | 405 | 400 | 388 | 425 | 350 |

(continued)

|  | Ex.1 | Ex.7 | Ex.8 | Ex.9 | Ex.10 | Comp. Ex.1 | Comp. Ex.12 |
|---|---|---|---|---|---|---|---|
| Change (%) in puncture strength | 1.65 | 3.53 | 4.71 | 5.88 | 8.71 | - | 17.6 |

Referring to Table 3, it can be seen that the separators including 0.05-0.3 parts by weight of a Type 2 photoinitiator based on 100 parts by weight of the solvent manufactured in Examples 1 and 7-10 shows a decrease in tensile strength in the machine direction to 20% or less, as compared to the non-crosslinked separator undergoing no crosslinking manufactured in Comparative Example 1.

It can be also seen that the separators including 0.05-0.2 parts by weight of a Type 2 photoinitiator based on 100 parts by weight of the solvent manufactured in Examples 1 and 7-9 show a decrease in puncture strength to 10% or less, as compared to the non-crosslinked separator undergoing no crosslinking manufactured in Comparative Example 1.

On the contrary, it can be seen that the separator including larger than 0.3 parts by weight of a Type 2 photoinitiator based on 100 parts by weight of the solvent manufactured in Comparative Example 12 shows a decrease in tensile strength in the machine direction and a decrease in puncture strength to 20% or more and 10% or more, respectively, as compared to the non-crosslinked separator undergoing no crosslinking manufactured in Comparative Example 1.

## Claims

1. A crosslinked separator for a lithium secondary battery, which comprises a crosslinked polyolefin porous substrate comprising a plurality of fibrils and pores formed by the fibrils entangled with one another, wherein polyolefin chains forming the fibrils are crosslinked directly with one another; and
shows a change in tensile strength of 20% or less in the machine direction, as compared to a non-crosslinked separator including a polyolefin porous substrate before crosslinking.

2. The crosslinked separator for a lithium secondary battery according to claim 1, which shows a change in tensile strength of 0-20% in the machine direction, as compared to the non-crosslinked separator.

3. The crosslinked separator for a lithium secondary battery according to claim 1, which shows a change in puncture strength of 10% or less, as compared to the non-crosslinked separator.

4. The crosslinked separator for a lithium secondary battery according to claim 1, which further comprises a porous coating layer formed on at least one surface of the crosslinked polyolefin porous substrate,

wherein the non-crosslinked separator further comprises a porous coating layer formed on at least one surface of the polyolefin porous substrate before crosslinking, and
the porous coating layer comprises a binder polymer and inorganic particles, and has interstitial volumes formed by the inorganic particles that are substantially in contact with one another, wherein the interstitial volumes mean spaces defined by the inorganic particles that are substantially in contact with one another in a closely packed or densely packed structure of the inorganic particles, and the interstitial volumes among the inorganic particles become vacant spaces forming pores of the porous coating layer.

5. The crosslinked separator for a lithium secondary battery according to claim 1, which shows a change in air permeability of 10% or less, as compared to the non-crosslinked separator.

6. The crosslinked separator for a lithium secondary battery according to claim 1, which shows a change in weight per unit area of 5% or less, as compared to the non-crosslinked separator.

7. The crosslinked separator for a lithium secondary battery according to claim 1, which shows a change in electrical resistance of 15% or less, as compared to the non-crosslinked separator.

8. The crosslinked separator for a lithium secondary battery according to claim 1, wherein the crosslinked polyolefin porous substrate has a crosslinking degree of 10-80%.

9. A method for manufacturing the crosslinked separator for a lithium secondary battery as defined in claim 1, the method comprising the steps of:

applying a Type 2 photoinitiator composition comprising a Type 2 photoinitiator and a solvent for the Type 2 photoinitiator to a polyolefin porous substrate; and
irradiating UV rays to the polyolefin porous substrate coated with the Type 2 photoinitiator composition, wherein the content of the Type 2 photoinitiator is 0.05-0.3 parts by weight based on 100 parts by weight of the solvent for the Type 2 photoinitiator.

10. The method for manufacturing the crosslinked separator for a lithium secondary battery according to claim 9, wherein the Type 2 photoinitiator composition is a composition for forming a porous coating layer further comprising inorganic particles and a binder polymer.

11. The method for manufacturing the crosslinked separator for a lithium secondary battery according to claim 9, wherein the Type 2 photoinitiator comprises thioxanthone (TX), a thioxanthone derivative, benzophenone (BPO), a benzophenone derivative, or a mixture of two or more of them.

12. The method for manufacturing the crosslinked separator for a lithium secondary battery according to claim 11, wherein the Type 2 photoinitiator comprises 2-isopropylthioxanthone (ITX), thioxanthone (TX), or a mixture thereof.

13. The method for manufacturing the crosslinked separator for a lithium secondary battery according to claim 9, wherein the UV rays are irradiated with an irradiation light dose of 10-1000 mJ/cm$^2$.

14. A lithium secondary battery comprising a positive electrode, a negative electrode and a separator interposed between the positive electrode and the negative electrode, wherein the separator is the crosslinked separator for a lithium secondary battery as defined in any one of claims 1 to 8.

FIG. 1

## INTERNATIONAL SEARCH REPORT

| International application No. |
| --- |
| **PCT/KR2020/015558** |

| A. | CLASSIFICATION OF SUBJECT MATTER |
| --- | --- |

**H01M 50/409**(2021.01)i; **H01M 50/40**(2021.01)i; **H01M 10/052**(2010.01)i

According to International Patent Classification (IPC) or to both national classification and IPC

| B. | FIELDS SEARCHED |
| --- | --- |

Minimum documentation searched (classification system followed by classification symbols)

H01M 50/409(2021.01); B29C 48/00(2019.01); H01G 11/52(2013.01); H01M 10/42(2006.01); H01M 2/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가교(cross link), 폴리올레핀(polyolefine), 분리막(separator), 광개시제 (photoinitiator), 피브릴(fibril), 다공성(porous)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X<br><br>Y | KR 10-2015-0071378 A (HANWHA TOTAL PETROCHEMICAL CO., LTD.) 26 June 2015 (2015-06-26)<br>See claims 1-10; paragraphs [0002], [0005], [0045], [0058] and [0058]; and table 1. | 1-3,5-9,11-14<br><br>4,10 |
| Y | KR 10-2016-0043768 A (UNIST(ULSAN NATIONAL INSTITUTE OF SCIENCE AND TECHNOLOGY)) 22 April 2016 (2016-04-22)<br>See claims 1 and 2; and paragraphs [0052] and [0091]. | 4,10 |
| A | KR 10-1955911 B1 (W-SCOPE KOREA CO., LTD.) 12 March 2019 (2019-03-12)<br>See entire document. | 1-14 |
| A | KR 10-2018-0039898 A (UNIST(ULSAN NATIONAL INSTITUTE OF SCIENCE AND TECHNOLOGY)) 19 April 2018 (2018-04-19)<br>See entire document. | 1-14 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 February 2021** | **23 February 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| | International application No. |
|---|---|
| | **PCT/KR2020/015558** |

### C.    DOCUMENTS CONSIDERED TO BE RELEVANT

| Category* | Citation of document, with indication, where appropriate, of the relevant passages | Relevant to claim No. |
|---|---|---|
| A | JP 2019-514185 A (SHANGHAI ENERGY NEW MATERIALS TECHNOLOGY CO., LTD.) 30 May 2019 (2019-05-30)<br>      See entire document. | 1-14 |

Form PCT/ISA/210 (second sheet) (July 2019)

**INTERNATIONAL SEARCH REPORT**
**Information on patent family members**

International application No.

**PCT/KR2020/015558**

| Patent document cited in search report | | | Publication date (day/month/year) | Patent family member(s) | | | Publication date (day/month/year) |
|---|---|---|---|---|---|---|---|
| KR | 10-2015-0071378 | A | 26 June 2015 | KR | 10-1536062 | B1 | 10 July 2015 |
| | | | | WO | 2015-093683 | A1 | 25 June 2015 |
| | | | | WO | 2015-093683 | A8 | 25 June 2015 |
| KR | 10-2016-0043768 | A | 22 April 2016 | | None | | |
| KR | 10-1955911 | B1 | 12 March 2019 | CN | 110857362 | A | 03 March 2020 |
| | | | | EP | 3614460 | A1 | 26 February 2020 |
| | | | | JP | 2020-031047 | A | 27 February 2020 |
| | | | | JP | 6688922 | B2 | 28 April 2020 |
| | | | | US | 2020-0067054 | A1 | 27 February 2020 |
| | | | | WO | 2020-040389 | A1 | 27 February 2020 |
| KR | 10-2018-0039898 | A | 19 April 2018 | | None | | |
| JP | 2019-514185 | A | 30 May 2019 | CN | 107304260 | A | 31 October 2017 |
| | | | | CN | 107304260 | B | 24 March 2020 |
| | | | | EP | 3447087 | A1 | 27 February 2019 |
| | | | | EP | 3447087 | A4 | 25 December 2019 |
| | | | | KR | 10-2019-0027356 | A | 14 March 2019 |
| | | | | US | 2019-0088985 | A1 | 21 March 2019 |
| | | | | WO | 2017-181848 | A1 | 26 October 2017 |

Form PCT/ISA/210 (patent family annex) (July 2019)

**EP 4 040 589 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190142909